# EUROPÄISCHE PATENTSCHRIFT

(11) **EP 3 659 347 B1**
(45) Veröffentlichungstag und Bekanntmachung des Hinweises auf die Patenterteilung: **31.03.2021**
(21) Anmeldenummer: 19723043.6
(22) Anmeldetag: 30.04.2019
(51) Int. Cl.: H04R 1/08, B60R 11/02, B60R 11/00

(54) **KRAFTFAHRZEUGDACHANTENNE MIT MINDESTENS EINEM KRAFTFAHRZEUGAUSSENMIKROFON, VERFAHREN ZUM BETREIBEN DERSELBEN UND KRAFTFAHRZEUG MIT MINDESTENS EINEM KRAFTFAHRZEUGAUSSENMIKROFON**
MOTOR VEHICLE ROOF ANTENNA WITH A MOTOR VEHICLE EXTERNAL MICROPHONE, METHOD OF OPERATING THE SAME, AND MOTOR VEHICLE HAVING AT LEAST ONE MOTOR VEHICLE EXTERNAL MICROPHONE
ANTENNE DE TOIT DE VÉHICULE À MOTEUR AVEC MICROPHONE EXTÉRIEUR DE VÉHICULE À MOTEUR, PROCÉDÉ POUR FAIRE FONCTIONNER DE LA MÊME ET VÉHICULE À MOTEUR ÉQUIPÉ D'AU MOINS UN MICROPHONE EXTÉRIEUR DE VÉHICULE À MOTEUR

(30) Priorität: 05.06.2018 DE 102018208776
(43) Veröffentlichungstag der Anmeldung: 03.06.2020
(73) Patentinhaber: Audi AG, 85045 Ingolstadt (DE)
(72) Erfinder: GAHNER, Enrico, 85088 Vohburg a.D. (DE)
(86) Internationale Anmeldenummer: PCT/EP2019/061121
(87) Internationale Veröffentlichungsnummer: WO 2019/233681

(56) Entgegenhaltungen:
- DE-A1- 10 038 803
- DE-A1-102014 225 803
- JP-A- 2007 235 316

## Beschreibung

Die vorliegende Erfindung betrifft eine Kraftfahrzeugdachantenne mit mindestens einem Kraftfahrzeugaußenmikrofon mit mindestens einer Mikrofoneinheit, die eine in einem Mikrofongehäuse angeordnete Mikrofonkapsel aufweist, wobei das Mikrofongehäuse mindestens eine Mikrofonöffnung aufweist, wodurch ein akustischer Kanal zwischen der mindestens einen Mikrofonöffnung und der Mikrofonkapsel gebildet ist, wobei das Kraftfahrzeugaußenmikrofon eine Umschaltvorrichtung umfasst, die ausgebildet ist, die mindestens eine Mikrofonöffnung in einem aktivierten Zustand des Kraftfahrzeugaußenmikrofons freizugeben und in einem deaktivierten Zustand des Kraftfahrzeugaußenmikrofons zu verschließen. Sie betrifft überdies ein Kraftfahrzeug mit mindestens einem Kraftfahrzeugaußenmikrofon. Schließlich betrifft die Erfindung ein Verfahren zum Betreiben einer Kraftfahrzeugdachantenne.

Aus der JP 2007 235316 A, die zur Formulierung des Oberbegriffs von Anspruch 7 herangezogen wurde, ist ein Kraftfahrzeugaußenmikrofon bekannt, dessen Mikrofonöffnung geschützt werden kann. Zu diesem Zweck kann eine Klappe verschwenkt beziehungsweise verschoben werden.

Aus der DE 10 2014 225 803 A1 ist eine Erkennungseinrichtung zum Erkennen eines sich im Straßenverkehr im Einsatz befindlichen, Leuchtsignale abgebenden Einsatzfahrzeugs bekannt, die zum Einbau in ein Fahrzeug vorgesehen ist. Die Erkennungseinrichtung kann eine akustische Sensoreinrichtung umfassen, mit der akustische Signale von Einsatzfahrzeugen erfassbar sind.

In diesem Zusammenhang ist aus der DE 102 03 599 A1 eine Mikrofonbaugruppe für eine Fahrzeugfreisprecheinrichtung bekannt, wobei die Mikrofonbaugruppe eine Mikrofoneinheit umfasst, die zwischen einer eingefahrenen und einer ausgefahrenen Stellung reversibel verfahrbar ist. Die Mikrofonbaugruppe ist im Fahrzeuginnenraum angeordnet, insbesondere in einer Einbuchtung einer Dachhimmelverkleidung.

Aus der DE 100 38 803 A1 ist ein System zum Öffnen eines Kraftfahrzeugs bekannt. Das System umfasst ein an einer Fahrzeugaußenstruktur angeordnetes Mikrofon, das zum Empfang einer Spracheingabe dient. In einem Ausführungsbeispiel sind zwei Mikrofone in einem Kraftfahrzeugemblem angeordnet. Alternativ oder zusätzlich sind zwei Mikrofone in den Rückleuchten des Kraftfahrzeugs integriert.

Die DE 10 2014 225 397 A1 betrifft die Erkennung eines Rettungsfahrzeugs mit einem digitalen Bildsensor durch ein Fahrzeug. Zur Erkennung des Rettungsfahrzeugs dient ein Mikrofon, das außerhalb des Fahrzeugs angeordnet ist.

Mit den aus dem Stand der Technik bekannten Kraftfahrzeugaußenmikrofonen lässt sich häufig keine ausreichende Empfangsqualität sicherstellen, um eine Sprachbedienbarkeit eines Kraftfahrzeugs von außen zu ermöglichen. Je besser die Spracherkennung, umso unterschiedlicher können die vom Kraftfahrzeug umzusetzenden Sprachbefehle eines Benutzers sein, beispielsweise Öffnen des Kofferraums, Licht an, Entriegeln des Kraftfahrzeugs, etc. Weiterhin soll die Spracherkennung möglichst in einem 360°-Umfeld um das Kraftfahrzeug herum ermöglicht werden.

Die Aufgabe der vorliegenden Erfindung besteht deshalb darin, eine verbesserte Sprachbedienbarkeit eines Kraftfahrzeugs von außen bereitzustellen.

Diese Aufgabe wird gelöst durch eine Kraftfahrzeugdachantenne mit den Merkmalen von Patentanspruch 1, ein Kraftfahrzeug mit mindestens einem Kraftfahrzeugaußenmikrofon nach Patentanspruch 7 sowie durch ein Verfahren zum Betreiben einer Kraftfahrzeugdachantenne mit den Merkmalen von Patentanspruch 11.

Der vorliegenden Erfindung liegt die Erkenntnis zugrunde, dass ein Kraftfahrzeugaußenmikrofon entsprechend im Außenbereich eines Kraftfahrzeugs angeordnet sein muss, um Sprachbefehle der sprachbedienenden Person zu detektieren. Da es sich bei Mikrofonen um Druckempfänger handelt, müssen diese akustische Öffnungen haben, um die Schallsignale empfangen zu können. Werden die Öffnungen verschlossen, sind diese zwar geschützt gegen Staub, Schmutz, Wasser, Schnee und dergleichen, allerdings geht ihre Empfangsqualität dadurch deutlich zurück. Werden die Öffnungen dauerhaft offen gehalten, besteht die Gefahr einer Verunreinigung durch Staub, Schmutz, Wasser, Schnee und dergleichen. Gerade bei im Regen fahrenden Fahrzeugen oder wenn sich diese in einer Waschanlage befinden, wären die Mikrofone erheblichen Umwelteinflüssen ausgesetzt, würden nach Verschmutzung nicht mehr ihrer eigentlichen Spezifikation entsprechen und der Beamformingalgorithmus und damit die Spracherkennung wäre beeinträchtigt.

Die Erfindung basiert weiterhin auf der Erkenntnis, dass die Sprachbedienbarkeit von außen im Wesentlichen im Stillstand des Kraftfahrzeugs benötigt wird, wohingegen bei sich bewegendem Kraftfahrzeug die Bedienung mittels Sprachbefehlen im Innenraum des Kraftfahrzeugs unter Verwendung von Innenraummikrofonen erfolgen kann. Insofern genügt es, wenn die Öffnungen der Mikrofone lediglich im Stillstand eines Kraftfahrzeugs freigegeben werden, wohingegen sie zum Schutz der Mikrofone im sich bewegenden Kraftfahrzeug verschlossen werden. Damit kann einerseits im Stillstand des Kraftfahrzeug eine hervorragende Sprachbedienbarkeit bereitgestellt werden; andererseits werden die Mikrofone in der Phase, in der sie nicht benötigt werden, zuverlässig vor Verschmutzung und dergleichen geschützt.

Eine erfindungsgemäße Kraftfahrzugdachantenne weist deshalb weiterhin eine Umschaltvorrichtung auf, die ausgebildet ist, die mindestens eine Mikrofonöffnung in einem aktivierten Zustand des Kraftfahrzeugaußenmikrofons freizugeben und in einem deaktivierten Zustand des Kraftfahrzeugaußenmikrofons zu verschließen. Damit stellt das Kraftfahrzeugaußenmikrofon für die Schallerkennung bei stehendem Kraftfahrzeug eine hervorragende Empfangsqualität bereit, wohingegen während der Fahrt des Kraftfahrzeugs ein Zusetzen der mindestens einen Mikrofonöffnung durch Schmutz, Staub, Wasser und dergleichen zuverlässig verhindert wird.

Erfindungsgemäß ist weiterhin vorgesehen, dass die Kraftfahrzeugdachantenne einen Basiskörper zum Montieren auf ein Fahrzeugdach und einen daran gekoppelten Antennenkörper umfasst, wobei mittels der Umschaltvorrichtung zumindest ein Element des Basiskörpers oder des Antennenkörpers, bevorzugt der Antennenkörper selbst, bewegbar ist. Durch die Relativbewegung zwischen Basiskörper und Antennenkörper kann demnach die Mikrofonöffnung mindestens einer Mikrofoneinheit geöffnet oder verschlossen werden, um das Kraftfahrzeugaußenmikrofon in den aktivierten oder den deaktivierten Zustand zu versetzen. Durch die Unterbringung des Kraftfahrzeugaußenmikrofons, bevorzugt mit einer Vielzahl von Mikrofoneinheiten, beispielsweise fünf Mikrofoneinheiten, in der Kraftfahrzeugdachantenne kann die gewünschte 360° Umfeld-Abdeckung um das Kraftfahrzeug herum bereitgestellt werden.

Eine bevorzugte Ausführungsform zeichnet sich dadurch aus, dass die Umschaltvorrichtung als Verstellvorrichtung einen Stellmotor umfasst, um das Kraftfahrzeugaußenmikrofon vom deaktivierten Zustand in den aktivierten Zustand zu versetzen oder umgekehrt. Mittels eines Stellmotors kann das Kraftfahrzeugaußenmikrofon besonders zuverlässig vom aktivierten in den deaktivierten Zustand versetzt werden oder umgekehrt. Durch die Verwendung eines Stellmotors kann das Kraftfahrzeugaußenmikrofon ohne weiteren Energiebedarf, das heißt stromlos, in dem jeweiligen gewünschten Zustand gehalten werden.

Alternativ oder zusätzlich kann die Umschaltvorrichtung als Verstellvorrichtung mindestens eine Elektromagnetvorrichtung sowie eine Ansteuervorrichtung für die Elektromagnetvorrichtung umfassen, wobei die Elektromagnetvorrichtung ein erstes und ein zweites Element umfasst, wobei das erste Element beweglich gegenüber dem zweiten Element gelagert ist, und wobei eines der beiden Elemente ortsfest mit der Mikrofonöffnung gekoppelt ist, wobei die Ansteuervorrichtung ausgelegt ist, die Elektromagnetvorrichtung derart anzusteuern, dass sich das erste und das zweite Element in einem Zustand anziehen und/oder in einem anderen Zustand abstoßen oder jedenfalls nicht anziehen, um die mindestens eine Mikrofonöffnung zu verschließen und freizugeben oder umgekehrt. Die Verwendung einer Elektromagnetvorrichtung stellt eine besonders kostengünstige Möglichkeit bereit, das Kraftfahrzeugaußenmikrofon vom deaktivierten Zustand in den aktivierten Zustand zu versetzen oder umgekehrt.

Bei beiden Varianten kann die Umschaltvorrichtung mindestens eine Federvorrichtung umfassen, die derart angeordnet ist, dass sie der Verstellvorrichtung entgegenwirkt. Wird demnach die jeweilige Verstellvorrichtung so ausgelegt, dass damit das Kraftfahrzeugaußenmikrofon in den aktivierten Zustand versetzt wird, so wird das Kraftfahrzeugaußenmikrofon mittels der Federvorrichtung ohne weiteren Energiebedarf zuverlässig im deaktivierten Zustand gehalten. Zum Aktivieren des Kraftfahrzeugaußenmikrofons wird demnach bevorzugt die Federvorrichtung gespannt, sodass sie im deaktivierten Zustand des Kraftfahrzeugaußenmikrofons sich in einem demgegenüber entspannteren Zustand befindet.

Da in dem Fall eine Vielzahl von Mikrofoneinheiten auf engem Raum angeordnet ist, die zugleich aktiviert bzw. deaktiviert werden, genügt es, die Umschaltvorrichtung nur einmal vorzusehen.

Bevorzugt ist die Umschaltvorrichtung ausgebildet, den Antennenkörper relativ zum Basiskörper zu bewegen, sodass zum Freigeben der mindestens einen Mikrofonöffnung zumindest eine Öffnung, bevorzugt ein umlaufender Spalt, insbesondere ein umlaufender Spalt mit einer Breite zwischen 1 und 3 mm, zwischen dem Basiskörper und dem Antennenkörper erzeugt wird. Dabei kann jeder Mikrofonöffnung eine separate Öffnung zugeordnet sein oder ein umlaufender Spalt allen Mikrofonöffnungen. Damit kann durch eine einzige Bewegung des Antennenkörpers relativ zum Basiskörper die Mikrofonöffnung von einer Vielzahl von Mikrofoneinheiten freigegeben werden. Ein Hub zwischen 1 und 3 mm genügt, um einen ausreichend breiten akustischen Kanal zu erzeugen, um eine hohe Empfangsqualität von Sprachsignalen sicherzustellen.

Bevorzugt ragt die mindestens eine Mikrofonöffnung in die Öffnung zwischen dem Basiskörper und dem Antennenkörper, wobei die Mikrofonkapsel im Einbauzustand des Kraftfahrzeugaußenmikrofons oberhalb der Öffnung angeordnet ist, wobei das Mikrofongehäuse bevorzugt wasserdicht ausgebildet ist. Dadurch wird sichergestellt, dass bei einem Wassersäulentest, bei dem die Kraftfahrzeugantenne mit einem Wasserdruck entsprechend einer 1 m hohen Wassersäule belastet wird, die Mikrofonkapsel nicht vom Wasser erreicht wird und somit entsprechend geschützt ist.

Gemäß einem weiteren Aspekt betrifft die Erfindung ein Kraftfahrzeug mit mindestens einem Kraftfahrzeugaußenmikrofon mit mindestens einer Mikrofoneinheit, die eine in einem Mikrofongehäuse angeordnete Mikrofonkapsel aufweist, wobei das Mikrofongehäuse mindestens eine Mikrofonöffnung aufweist, wodurch ein akustischer Kanal zwischen der mindestens einen Mikrofonöffnung und der Mikrofonkapsel gebildet ist, wobei das Kraftfahrzeugaußenmikrofon eine Umschaltvorrichtung umfasst, die ausgebildet ist, die mindestens eine Mikrofonöffnung in einem aktivierten Zustand des Kraftfahrzeugmikrofons freizugeben und in einem deaktivierten Zustand des Kraftfahrzeugmikrofons zu verschließen, wobei das Kraftfahrzeug eine Kraftfahrzeugaußenoberfläche mit mindestens einer Ausnehmung aufweist, in der das mindestens eine Kraftfahrzeugaußenmikrofon im deaktivierten Zustand angeordnet ist, wobei im aktivierten Zustand des Kraftfahrzeugaußenmikrofons die mindestens eine Mikrofonöffnung aus der Kraftfahrzeugaußenoberfläche herausragt. Damit kann das Kraftfahrzeugaußenmikrofon auch außerhalb der Kraftfahrzeugdachantenne angeordnet sein. Die Positionierung des mindestens einen Kraftfahrzeugaußenmikrofons kann überall am Kraftfahrzeug erfolgen, abhängig von der Parametrierung eines entsprechenden Erkenneralgorithmus zur Spracherkennung.

Bevorzugt wird ein Teil des Kraftfahrzeugaußenmikrofons mittels der Umschaltvorrichtung, insbesondere um 1 bis 3 mm, aus der Kraftfahrzeugaußenoberfläche herausbewegt, um das Kraftfahrzeugaußenmikrofon in den aktivierten Zustand zu versetzen. Zum Deaktivieren wird das Kraftfahrzeugaußenmikrofon wieder in die Ausnehmung der Kraftfahrzeugaußenoberfläche versenkt. Damit wird das Mikrofon im deaktivierten Zustand geschützt. Der CW-Wert des Kraftfahrzeugs wird durch das Kraftfahrzeugaußenmikrofon daher nicht nachteilig beeinflusst.

Erfindungsgemäß umfasst das Kraftfahrzeug eine Steuervorrichtung, wobei die Steuervorrichtung ausgelegt ist, beim Feststellen einer Verriegelung des Kraftfahrzeugs das mindestens eine Kraftfahrzeugaußenmikrofon in den aktivierten Zustand zu versetzen. Auf diese Weise wird das Kraftfahrzeugaußenmikrofon genau dann aktiviert, wenn es benötigt wird, nämlich im Stillstand des Kraftfahrzeugs. Eine manuelle Aktivierung des Kraftfahrzeugaußenmikrofons, die auch leicht vergessen werden kann, ist deshalb nicht nötig.

In diesem Zusammenhang ist die Steuervorrichtung bevorzugt ausgelegt, zumindest beim Feststellen eines Startens des Kraftfahrzeugs das mindestens eine Kraftfahrzeugaußenmikrofon in den deaktivierten Zustand zu versetzen. Da davon auszugehen ist, dass das Kraftfahrzeug nach dem Starten bewegt wird, ist dies genau der richtige Zeitpunkt, um ein automatisches Deaktivieren und damit Schützen des Kraftfahrzeugaußenmikrofons zu veranlassen. Da dies, wie erwähnt, an das Starten des Kraftfahrzeugs gekoppelt ist, braucht ein Benutzer des Kraftfahrzeugs das Kraftfahrzeugaußenmikrofon nicht manuell zu deaktivieren, was leicht vergessen werden kann.

Bevorzugt ist die Steuervorrichtung ausgelegt, nach Ablauf einer vorbestimmten Zeitdauer nach dem Verriegeln des Kraftfahrzeugs das mindestens eine Kraftfahrzeugaußenmikrofon in den deaktivierten Zustand zu versetzen, wobei die Steuervorrichtung ausgelegt ist, bei Feststellen einer Annäherung eines autorisierten Benutzers unter einen vorgebbaren Schwellenwert das mindestens eines Kraftfahrzeugaußenmikrofon wieder in den aktivierten Zustand zu versetzen. Auf diese Weise wird sichergestellt, dass die Mikrofonöffnungen dann, wenn das Kraftfahrzeug sich längere Zeit im Ruhezustand befindet, nicht unerwünscht lange ungeschützt sind. Die Annäherung eines autorisierten Benutzers kann beispielsweise über ein mobiles Endgerät, insbesondere ein vom Benutzer mitgeführtes Smartphone, kraftfahrzeugseitig detektiert werden. Mittels einschlägiger NFC Techniken, insbesondere Bluetooth Low Energy, kann entsprechend die Mikrofonverfügbarkeit rechtzeitig initialisiert werden, sodass das Kraftfahrzeugaußenmikrofon funktionsbereit ist, wenn sich der Benutzer in einer sprachbedienbaren Entfernung zum Kraftfahrzeug befindet. Auf diese Weise sind die Mikrofonöffnungen nur für den tatsächlich relevanten Zeitraum geöffnet.

Das Kraftfahrzeug kann weiterhin mindestens eine Sensorvorrichtung umfassen, die ausgelegt ist, festzustellen, ob das Kraftfahrzeug in einer Waschanlage abgestellt und verriegelt wurde, wobei die mindestens eine Sensorvorrichtung mit der Steuervorrichtung gekoppelt ist und die Steuervorrichtung ausgelegt ist, bei Feststellen eines Abstellens und Verriegelns des Kraftfahrzeugs in einer Waschanlage das mindestens eine Kraftfahrzeugaußenmikrofon zu deaktivieren und/oder im deaktivierten Zustand zu belassen. Auf diese Weise werden die Mikrofonöffnungen vor den enormen Wasserdrücken geschützt, die an einer Waschanlage auftreten, auch wenn das Fahrzeug über einen automatischen Aktivierungsmechanismus, siehe oben, verfügt. Als Sensorvorrichtung kann insbesondere ein Regensensor, eine Kameravorrichtung oder ein Ortungssystem, beispielsweise ein Navigationssystem auf GPS-Basis, fungieren. Hiermit lässt sich zuverlässig feststellen, dass sich das Kraftfahrzeug in einer Waschanlage befindet und das mindestens eine Kraftfahrzeugaußenmikrofon zu seinem Schutz in den deaktivierten Zustand versetzt werden muss.

Die mit Bezug auf die erfindungsgemäße Kraftfahrzeugdachantenne sowie das erfindungsgemäße Kraftfahrzeug vorgestellten bevorzugten Ausführungsformen und deren Vorteile gelten entsprechend, soweit anwendbar, für das erfindungsgemäße Verfahren zum Betreiben einer Kraftfahrzeugdachantenne.

Im Nachfolgenden werden nunmehr Ausführungsbeispiele der vorliegenden Erfindung unter Bezugnahme auf die beigefügten Zeichnungen näher beschrieben. Diese zeigen:
- Fig. 1: in schematischer Darstellung ein Ausführungsbeispiel einer erfindungsgemäßen Kraftfahrzeugdachantenne mit einem Kraftfahrzeugaußenmikrofon im aktivierten Zustand des Kraftfahrzeugaußenmikrofons (Fig. 1a) sowie im deaktivierten Zustand des Kraftfahrzeugaußenmikrofons (Fig. 1b); und
- Fig. 2: in schematischer Darstellung ein weiteres Ausführungsbeispiel eines Kraftfahrzeugaußenmikrofons.

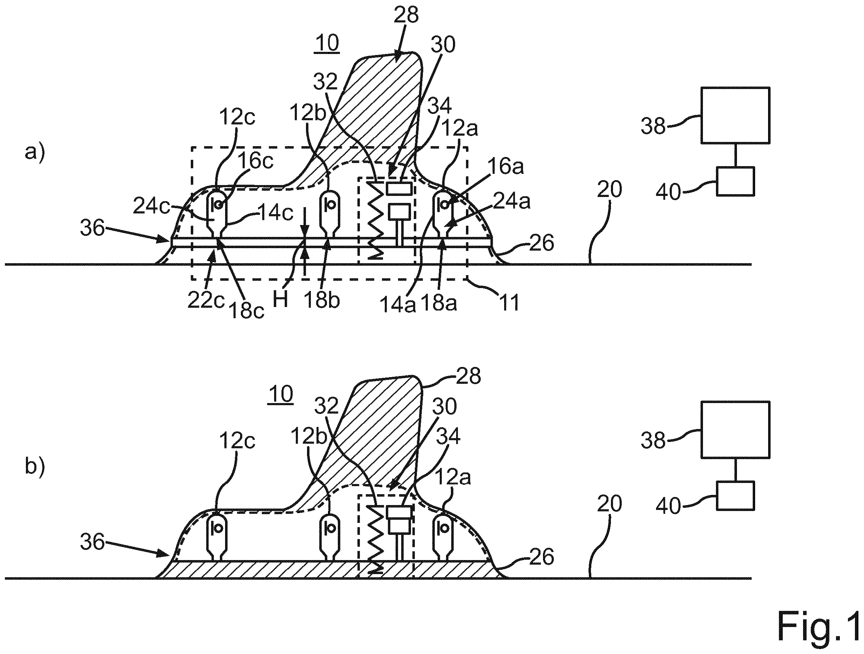

Fig. 1 zeigt in schematischer Darstellung eine erfindungsgemäße Kraftfahrzeugdachantenne 10, wobei Fig. 1a die Kraftfahrzeugdachantenne 10 mit aktiviertem Kraftfahrzeugaußenmikrofon 11 zeigt und Fig. 1b die Kraftfahrzeugdachantenne 10 mit deaktiviertem Kraftfahrzeugaußenmikrofon 11. Das Kraftfahrzeugaußenmikrofon 11 umfasst vorliegend mehrere Mikrofoneinheiten 12a bis 12c mit jeweils einem wasserdichten Gehäuse 14, in dessen oberem Bereich, d.h. einer Öffnung 18 diametral gegenüberliegenden Seite des Gehäuses 14, eine Mikrofonkapsel 16 angeordnet ist. Die Öffnung 18 ist in Richtung des Fahrzeugdachs 20 orientiert und ist bevorzugt mit einer wasserundurchlässigen und windschützenden Membran 22 versehen, um die Mikrofonkapsel 16 bei Regen oder Wind auch bei stehendem Kraftfahrzeug zu schützen. Zwischen der Öffnung 18 und der Mikrofonkapsel 16 wird ein akustischer Kanal 24 gebildet.

Die Kraftfahrzeugdachantenne 10 umfasst einen Basiskörper 26, der auf dem Fahrzeugdach 20 befestigt ist. Der Basiskörper 26 bildet einen Antennenfuß und einen inneren Antennenkörper. Hier sind die Mikrofoneinheiten 12 und weitere Elektronik verortet. Die Kraftfahrzeugdachantenne 10 umfasst weiterhin einen Antennenkörper 28, der relativ zum Basiskörper 26 bewegbar gelagert ist. Der Antennenkörper 28 weist vorliegend eine Finnenform auf. Zum Zweck der Relativbewegung ist eine Umschaltvorrichtung 30 vorgesehen, die im dargestellten Ausführungsbeispiel eine Federvorrichtung 32 und einen Elektromagneten 34 mit zwei zusammenwirkenden Elementen umfasst. Das in der Darstellung obere Element des Elektromagneten 34 ist fest mit dem Antennenkörper 28 verbunden, während das untere Element des Elektromagneten 34 fest mit dem Basiskörper 26 verbunden ist. Vorliegend dient eine einzige Umschaltvorrichtung 30 zum Umschalten jeder Mikrofoneinheit 12a bis 12c. Mit anderen Worten umfasst das Kraftfahrzeugaußenmikrofon 11 vorliegend eine Vielzahl von Mikrofoneinheiten 12a bis 12c.

Fig. 1a zeigt den Zustand bei aktiviertem Kraftfahrzeugaußenmikrofon 11, der daran erkennbar ist, dass sich der Antennenkörper 28 unter Ausbildung eines Spalts 36, der eine Breite H aufweist, vom Basiskörper 26 wegbewegt hat. Dies wird dadurch erreicht, dass der Elektromagnet 34 nicht bestromt wird, wobei die Federvorrichtung 32 derart ausgelegt ist, dass sie bei nicht bestromtem Elektromagneten 34 den Antennenkörper 28 vom Basiskörper 26 wegdrückt. Um eine feste Breite H des Spalts 36 sicherzustellen, sind nicht dargestellte Begrenzungselemente vorgesehen, die die Relativbewegung des Antennenkörpers 28 gegenüber dem Basiskörper 26 begrenzen.

Die Öffnungen 18 der Mikrofoneinheiten 12 münden in den Spalt 36. Wenngleich vorliegend ein umlaufender Spalt 36 dargestellt ist, genügen auch einzelne Öffnungen im Bereich der Mikrofone 12, so dass diese geöffnet und verschlossen werden können.

Fig. 1b zeigt den Zustand bei deaktiviertem Kraftfahrzeugaußenmikrofon 11. Dieser Zustand wird erreicht durch Bestromung des Elektromagneten 34. Dadurch wird der Antennenkörper 28 unter Schließung des Spalts 36 auf den Basiskörper 26 zubewegt. Gleichzeitig wird die Federvorrichtung 32 gespannt. Die Öffnungen 18 der Mikrofoneinheiten 12 werden verschlossen.

Alternativ zu der Umschaltvorrichtung von Fig. 1 kann auch ein Stellmotor vorgesehen werden, um den umlaufenden Spalt bzw. die Öffnungen zu öffnen und zu schließen.

Eine Steuervorrichtung 38 ist ausgelegt, beim Feststellen einer Verriegelung des Kraftfahrzeugs das Kraftfahrzeugaußenmikrofon 11 in den aktivierten Zustand zu versetzen. Beim Feststellen des Startens des Kraftfahrzeugs oder wenn festgestellt wird, dass sich das Kraftfahrzeug in Bewegung setzt oder die Zündung eingeschaltet wird, wird das Kraftfahrzeugaußenmikrofon 11 in den deaktivierten Zustand versetzt.

Die Steuervorrichtung 38 kann ausgelegt sein, nach Ablauf einer vorbestimmten Zeitdauer nach dem Verriegeln des Kraftfahrzeugs das Kraftfahrzeugaußenmikrofon 11 in den deaktivierten Zustand zu versetzen, wobei die Steuervorrichtung 38 ausgelegt ist, bei Feststellen einer Annäherung eines autorisierten Benutzers unter einem vorgebbaren Schwellenwert das Kraftfahrzeugaußenmikrofon 11 wieder in den aktivierten Zustand zu versetzen. Der Hub H beträgt bevorzugt zwischen 1 und 3 mm. Der Hub sollte möglichst gering sein, damit die Öffnungen 18 auch bei stehendem Fahrzeug vor Umwelteinflüssen geschützt sind. Ein geringer Hub H ist auch für eine designtechnisch möglichst unauffällige Realisierung des Spalts 36 anzustreben. Aufgrund der passiven Federwirkung wird bei abgestelltem Fahrzeug kein Ruhestrom verbraucht, um den Spalt 36 offen zu halten.

Das Fahrzeug kann eine Sensorvorrichtung 40 umfassen, die ausgelegt ist, festzustellen, ob das Kraftfahrzeug in einer Waschanlage abgestellt und verriegelt wurde. Die Sensorvorrichtung 40 ist mit der Steuervorrichtung 38 gekoppelt, wobei die Steuervorrichtung 38 ausgelegt ist, bei Feststellen eines Abstellens und Verriegelns des Kraftfahrzeugs in einer Waschanlage das Kraftfahrzeugaußenmikrofon 11 zu deaktivieren und/oder im deaktivierten Zustand zu belassen.

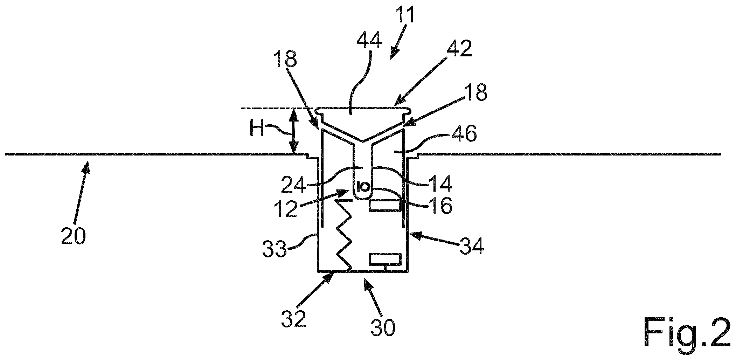

Fig. 2 zeigt ein weiteres Ausführungsbeispiel. Dieses Ausführungsbeispiel zeichnet sich dadurch aus, dass das Kraftfahrzeugaußenmikrofon 11 einen verfahrbaren Zylinder 42 umfasst, der seinerseits eine Mikrofoneinheit 12 und eine Umschaltvorrichtung 30 umfasst. Der verfahrbare Zylinder 42 ist in einer Ausnehmung 33 einer Fahrzeugoberfläche, beispielsweise des Fahrzeugdachs 20, angeordnet.

Ohne Bestromung des Elektromagneten 34 drückt die Federvorrichtung 32 den oberen Teil des verfahrbaren Zylinders 42 aus der Fahrzeugoberfläche 20 heraus. Dadurch werden die Öffnungen 18 des Mikrofons 12 freigegeben. Wird der obere Teil 44 des verfahrbaren Zylinders 42 lediglich durch Stützvorrichtungen mit dem unteren Teil 46 gekoppelt, kann die Öffnung 18 im Wesentlichen über 360° umlaufend ausgebildet sein, sodass mit dem Kraftfahrzeugaußenmikrofon 11 ein Empfang in im Wesentlichen alle Raumrichtungen ermöglicht ist. Das in der Darstellung von Fig. 2 untere Element des Elektromagneten 34 ist im Fahrzeug fixiert, das obere Element im Zylinder 42. Entsprechendes gilt für die Federvorrichtung 32. Der Zylinder 42 weist bevorzugt einen Durchmesser zwischen 5 und 15 mm auf.

Derartige verfahrbare Zylinder 42 können an beliebigen Stellen der Fahrzeugoberfläche 20 vorgesehen sein.

## Patentansprüche

1. Kraftfahrzeugdachantenne (10) mit mindestens einem Kraftfahrzeugaußenmikrofon (11) mit mindestens einer Mikrofoneinheit (12), die eine in einem Mikrofongehäuse (14) angeordnete Mikrofonkapsel (16) aufweist, wobei das Mikrofongehäuse (14) mindestens eine Mikrofonöffnung (18) aufweist, wodurch ein akustischer Kanal (24) zwischen der mindestens einen Mikrofonöffnung (18) und der Mikrofonkapsel gebildet ist, wobei das Kraftfahrzeugaußenmikrofon (11) eine Umschaltvorrichtung (30) umfasst, die ausgebildet ist die mindestens eine Mikrofonöffnung (18) in einem aktivierten Zustand des Kraftfahrzeugaußenmikrofons (11) freizugeben und in einem deaktivierten Zustand des Kraftfahrzeugaußenmikrofons (11) zu verschließen,
wobei die Kraftfahrzeugdachantenne (10) einen Basiskörper (26) zum Montieren auf ein Fahrzeugdach (20) und einen daran gekoppelten Antennenkörper (28) umfasst, wobei mittels der Umschaltvorrichtung (30) zumindest ein Element des Basiskörpers (26) oder des Antennenkörpers (28) bewegbar ist.

2. Kraftfahrzeugdachantenne (10) nach Anspruch 1,
**dadurch gekennzeichnet, dass**
die Umschaltvorrichtung (30) als Verstellvorrichtung einen Stellmotor umfasst, um das Kraftfahrzeugaußenmikrofon (11) vom deaktivierten Zustand in den aktivierten Zustand zu versetzen oder umgekehrt.

3. Kraftfahrzeugdachantenne (10) nach Anspruch 1 ,
**dadurch gekennzeichnet, dass**
die Umschaltvorrichtung (30) als Verstellvorrichtung mindestens eine Elektromagnetvorrichtung (34) sowie eine Ansteuervorrichtung (38) für die Elektromagnetvorrichtung (34) umfasst, wobei die Elektromagnetvorrichtung (34) ein erstes und ein zweites Element umfasst, wobei das erste Element beweglich gegenüber dem zweiten Element gelagert ist, und wobei eines der beiden Elemente ortsfest mit der Mikrofonöffnung (18) gekoppelt ist, wobei die Ansteuervorrichtung (38) ausgelegt ist, die Elektromagnetvorrichtung (34) derart anzusteuern, dass sich das erste und das zweite Element in einem Zustand anziehen und/oder in einem anderen Zustand abstoßen oder jedenfalls nicht anziehen, um die mindestens eine Mikrofonöffnung (18) zu verschließen und freizugeben oder umgekehrt.

4. Kraftfahrzeugdachantenne (10) nach einem der Ansprüche 2 oder 3,
**dadurch gekennzeichnet, dass**
die Umschaltvorrichtung (30) mindestens eine Federvorrichtung umfasst, die derart angeordnet ist, dass sie der Verstellvorrichtung entgegenwirkt.

5. Kraftfahrzeugdachantenne (10) nach einem der vorhergehenden Ansprüche,
**dadurch gekennzeichnet, dass**
die Umschaltvorrichtung (30) ausgebildet ist, den Antennenkörper (28) relativ zum Basiskörper (26) zu bewegen, so dass zum Freigeben der mindestens einen Mikrofonöffnung (18) zumindest eine Öffnung (36), bevorzugt ein umlaufender Spalt, insbesondere ein umlaufender Spalt mit einer Breite (H) zwischen 1 und 3 mm, zwischen dem Basiskörper (26) und dem Antennenkörper (28) erzeugt wird.

6. Kraftfahrzeugdachantenne (10) nach Anspruch 5,
**dadurch gekennzeichnet, dass**
die mindestens eine Mikrofonöffnung (18) in die Öffnung (36) zwischen dem Basiskörper (26) und dem Antennenkörper (28) ragt, wobei die Mikrofonkapsel (16) im Einbauzustand des Kraftfahrzeugaußenmikrofons (11) oberhalb der Öffnung (36) angeordnet ist, wobei das Mikrofongehäuse (14) bevorzugt wasserdicht ausgebildet ist.

7. Kraftfahrzeug mit mindestens einem Kraftfahrzeugaußenmikrofon (11), mit mindestens einer Mikrofoneinheit (12), die eine in einem Mikrofongehäuse (14) angeordnete Mikrofonkapsel (16) aufweist, wobei das Mikrofongehäuse (14) mindestens eine Mikrofonöffnung (18) aufweist, wodurch ein akustischer Kanal (24) zwischen der mindestens einen Mikrofonöffnung (18) und der Mikrofonkapsel gebildet ist, wobei das Kraftfahrzeugaußenmikrofon (11) eine Umschaltvorrichtung (30) umfasst, die ausgebildet ist die mindestens eine Mikrofonöffnung (18) in einem aktivierten Zustand des Kraftfahrzeugaußenmikrofons (11) freizugeben und in einem deaktivierten Zustand des Kraftfahrzeugaußenmikrofons (11) zu verschließen, wobei das Kraftfahrzeug eine Kraftfahrzeugaußenoberfläche (20) mit mindestens einer Ausnehmung (33) aufweist, in der das mindestens eine Kraftfahrzeugaußenmikrofon (11) im deaktivierten Zustand angeordnet ist, wobei im aktivierten Zustand des Kraftfahrzeugaußenmikrofons (11) die mindestens eine Mikrofonöffnung (18) aus der Kraftfahrzeugaußenoberfläche (20) herausragt,
**dadurch gekennzeichnet,**
**dass** das Kraftfahrzeug eine Steuervorrichtung (38) umfasst, wobei die Steuervorrichtung (38) ausgelegt ist, beim Feststellen einer Verriegelung des Kraftfahrzeugs das mindestens eine Kraftfahrzeugaußenmikrofon (11) in den aktivierten Zustand zu versetzen.

8. Kraftfahrzeug nach Anspruch 7,
**dadurch gekennzeichnet, dass**
die Steuervorrichtung (38) ausgelegt ist, zumindest beim Feststellen eines Startens des Kraftfahrzeugs das mindestens eine Kraftfahrzeugaußenmikrofon (11) in den deaktivierten Zustand zu versetzen.

9. Kraftfahrzeug nach einem der Ansprüche 7 oder 8,
**dadurch gekennzeichnet, dass**
die Steuervorrichtung (38) ausgelegt ist, nach Ablauf einer vorbestimmten Zeitdauer nach dem Verriegeln des Kraftfahrzeugs das mindestens eine Kraftfahrzeugaußenmikrofon (11) in den deaktivierten Zustand zu versetzen, wobei die Steuervorrichtung (38) ausgelegt ist, bei Feststellen einer Annäherung eines autorisierten Benutzers unter einen vorgebbaren Schwellenwert das mindestens eine Kraftfahrzeugaußenmikrofon (11) wieder in den aktivierten Zustand zu versetzen.

10. Kraftfahrzeug nach einem der Ansprüche 7 bis 9,
**dadurch gekennzeichnet, dass**
das Kraftfahrzeug mindestens eine Sensorvorrichtung (40) umfasst, die ausgelegt ist festzustellen, ob das Kraftfahrzeug in einer Waschanlage abgestellt und verriegelt wurde, wobei die mindestens eine Sensorvorrichtung (40) mit der Steuervorrichtung (38) gekoppelt ist und die Steuervorrichtung (38) ausgelegt ist, bei Feststellen eines Abstellens und Verriegelns des Kraftfahrzeugs in einer Waschanlage das mindestens eine Kraftfahrzeugaußenmikrofon (11) zu deaktivieren und/oder im deaktivierten Zustand zu belassen.

11. Verfahren zum Betreiben einer Kraftfahrzeugdachantenne (10) mit mindestens einem Kraftfahrzeugaußenmikrofon (11) mit mindestens einer Mikrofoneinheit (12), die eine in einem Mikrofongehäuse (14) angeordnete Mikrofonkapsel (16) aufweist, wobei das Mikrofongehäuse (14) mindestens eine Mikrofonöffnung (18) aufweist, wodurch ein akustischer Kanal (24) zwischen der mindestens einen Mikrofonöffnung (18) und der Mikrofonkapsel gebildet ist, wobei die Kraftfahrzeugdachantenne (10) einen Basiskörper (26) zum Montieren auf ein Fahrzeugdach (20) und einen daran gekoppelten Antennenkörper (28) umfasst, wobei zumindest ein Element des Basiskörpers (26) oder des Antennenkörpers (28) bewegbar ist, wobei das Verfahren folgende Schritte umfasst:
Zum Aktivieren des Kraftfahrzeugaußenmikrofons (11): Freigeben der mindestens einen Mikrofonöffnung (18) durch Bewegen zumindest eines Elements des Basiskörpers (26) oder des Antennenkörpers (28); und
zum Deaktivieren des Kraftfahrzeugaußenmikrofons (11): Verschließen der mindestens einen Mikrofonöffnung (18) durch Bewegen zumindest eines Elements des Basiskörpers (26) oder des Antennenkörpers (28).

## Claims

1. Motor vehicle roof antenna (10) with at least one motor vehicle external microphone (11) with at least one microphone unit (12), which has a microphone capsule (16) arranged in a microphone housing (14), wherein the microphone housing (14) has at least one microphone opening (18) through which an acoustic duct (24) is formed between the at least one microphone opening (18) and the microphone capsule, wherein the motor vehicle external microphone (11) comprises a switching device (30) which is configured to release the at least one microphone opening (18) in an activated state of the motor vehicle external microphone (11) and to close it in an deactivated state of the motor vehicle external microphone (11),
wherein the motor vehicle roof antenna (10) comprises a basic body (26) for mounting on a vehicle roof (20) and an antenna body (28) coupled thereto, wherein by means of the switching device (30) at least one element of the basic body (26) or of the antenna body (28) is movable.

2. Motor vehicle roof antenna (10) according to claim 1,
**characterised in that**
the switching device (30) as an adjusting device comprises a servomotor in order to transfer the motor vehicle external microphone (11) from the deactivated state into the activated state or vice versa.

3. Motor vehicle roof antenna (10) according to claim 1,
**characterised in that**
the switching device (30) as an adjusting device comprises at least one electromagnet device (34) as well as a control device (38) for the electromagnet device (34), wherein the electromagnet device (34) comprises a first and a second element, wherein the first element is mounted so as to be movable with respect to the second element, and wherein one of the two elements is coupled in a non-stationary manner with the microphone opening (18), wherein the control device (38) is configured to control the electromagnet device (34) such that the first and the second element attract one another in a first state and/or repel one another in another state or in any case do not attract one another, in order to close and release the at least one microphone opening (18) or vice versa.

4. Motor vehicle roof antenna (10) according to any of claims 2 or 3,
**characterised in that**
the switching device (30) comprises at least one spring device, which is arranged such that it acts counter to the adjusting device.

5. Motor vehicle roof antenna (10) according to any of the preceding claims,
**characterised in that**
the switching device (30) is configured to move the antenna body (28) relative to the basic body (26), such that for releasing the at least one microphone opening (18) at least one opening (36), preferably a peripheral gap, preferably a peripheral gap with a width (H) of between 1 and 3 mm, is created between the basic body (26) and the antenna body (28).

6. Motor vehicle roof antenna (10) according to claim 5,
**characterised in that**
the at least one microphone opening (18) protrudes into the opening (36) between the basic body (26) and the antenna body (28), wherein, in the installed state of the motor vehicle external microphone (11), the microphone capsule (16) is arranged above the opening (36), wherein the microphone housing (14) is preferably configured to be watertight.

7. Motor vehicle having at least one motor vehicle external microphone (11), with at least one microphone unit (12) which has a microphone capsule (16) arranged in a microphone housing (14), wherein the microphone housing (14) has at least one microphone opening (18), wherein an acoustic duct (24) is formed between the at least one microphone opening (18) and the microphone capsule, wherein the motor vehicle external microphone (11) has a switching device (30), which is configured to release the at least one microphone opening (18) in an activated state of the motor vehicle external microphone (11) and to close it in a deactivated state of the motor vehicle external microphone (11), wherein the motor vehicle has a motor vehicle outer surface (20) with at least one recess (33) in which the at least one motor vehicle external microphone (11) is arranged in the deactivated state, wherein in the activated state of the motor vehicle external microphone (11) the at least one microphone opening (18) protrudes from the motor vehicle outer surface (20),
**characterised in**
**that** the motor vehicle has a control device (38), wherein the control device (38) is configured to transfer the at least one motor vehicle external microphone (11) into the activated state when a locking of the motor vehicle is determined.

8. Motor vehicle according to claim 7,
**characterised in that**
the control device (38) is configured to transfer the at least one motor vehicle external microphone (11) into the deactivated state at least when a starting of the motor vehicle is determined.

9. Motor vehicle according to any of claims 7 or 8
**characterised in that**
the control device (38) is configured, after a predetermined time duration has elapsed after the locking of the motor vehicle, to transfer the at least one motor vehicle external microphone (11) into the deactivated state, wherein the control device (38) is configured to transfer the at least one motor vehicle external microphone (11) back into the activated state when an approach of an authorised user is determined below a predeterminable threshold value.

10. Motor vehicle according to any of claims 7 to 9,
**characterised in that**
the motor vehicle comprises at least one sensor device (40), which is configured to determine whether the motor vehicle has been parked in a carwash and locked, wherein the at least one sensor device (40) is coupled with the control device (38), and the control device (38) is configured to deactivate the at least one motor vehicle external microphone (11) and/or to leave it in the deactivated state, when it is determined that the motor vehicle has been parked in a carwash and locked.

11. Method for operating a motor vehicle roof antenna (10) with at least one motor vehicle external microphone (11) with at least one microphone unit (12), which has a microphone capsule (16) arranged in a microphone housing (14), wherein the microphone housing (14) has at least one microphone opening (18), through which an acoustic duct (24) is formed between the at least one microphone opening (18) and the microphone capsule, wherein the motor vehicle roof antenna (10) comprises a basic body (26) for mounting on a vehicle roof (20) and an antenna body (28) coupled thereto, wherein at least one element of the basic body (26) or of the antenna body (28) is movable, wherein the method comprises the following steps:
for activating the motor vehicle external microphone (11): releasing the at least one microphone opening (18) by moving at least one element of the basic body (26) or of the antenna body (28);
and
for deactivating the motor vehicle external microphone (11): closing the at least one microphone opening (18) by moving at least one element of the basic body (26) or of the antenna body (28).

## Revendications

1. Antenne de toit de véhicule à moteur (10) avec au moins un microphone extérieur de véhicule à moteur (11) avec au moins une unité de microphone (12) qui présente une capsule de microphone (16) disposée dans un boîtier de microphone (14), dans laquelle le boîtier de microphone (14) présente au moins une ouverture de microphone (18), moyennant quoi un canal acoustique (24) est formé entre l'au moins une ouverture de microphone (18) et la capsule de microphone, dans laquelle le microphone extérieur de véhicule à moteur (11) comprend un dispositif de commutation (30) qui est configuré pour libérer l'au moins une ouverture de microphone (18) dans un état activé du microphone extérieur de véhicule à moteur (11) et pour la fermer dans un état désactivé du microphone extérieur de véhicule à moteur (11),
dans laquelle l'antenne de toit de véhicule à moteur (10) comprend un corps de base (26) à monter sur un toit de véhicule (20) et un corps d'antenne (28) couplé à celui-ci, dans lequel au moyen du dispositif de commutation (30) au moins un élément du corps de base (26) ou du corps d'antenne (28) est mobile.

2. Antenne de toit de véhicule à moteur (10) selon la revendication 1,
**caractérisée en ce que**
le dispositif de commutation (30) comprend un servomoteur en tant que dispositif de réglage pour mettre le microphone extérieur de véhicule à moteur (11) de l'état désactivé à l'état activé ou inversement.

3. Antenne de toit de véhicule à moteur (10) selon la revendication 1,
**caractérisée en ce que**
le dispositif de commutation (30) comprend en tant que dispositif de réglage au moins un dispositif électromagnétique (34) ainsi qu'un dispositif de commande (38) pour le dispositif électromagnétique (34), dans laquelle le dispositif électromagnétique (34) comprend un premier et un second élément, dans laquelle le premier élément est logé de manière mobile par rapport au second élément, et dans lequel l'un des deux éléments est couplé de manière fixe à l'ouverture de microphone (18), dans laquelle le dispositif de commande (38) est conçu pour commander le dispositif électromagnétique (34) de telle sorte que le premier et le second élément s'attirent dans un état et/ou se repoussent dans un autre état ou chaque fois ne s'attirent pas pour fermer et libérer ou inversement l'au moins une ouverture de microphone (18).

4. Antenne de toit de véhicule à moteur (10) selon l'une des revendications 2 ou 3,
**caractérisée en ce que**
le dispositif de commutation (30) comprend au moins un dispositif à ressort qui est disposé de telle sorte qu'il contrecarre le dispositif de réglage.

5. Antenne de toit de véhicule à moteur (10) selon l'une des revendications précédentes,
**caractérisée en ce que**
le dispositif de commutation (30) est configuré pour déplacer le corps d'antenne (28) par rapport au corps de base (26) de sorte que pour la libération de l'au moins une ouverture de microphone (18) au moins une ouverture (36), de préférence une fente périphérique, en particulier une fente périphérique avec une largeur (H) entre 1 et 3 mm, est générée entre le corps de base (26) et le corps d'antenne (28).

6. Antenne de toit de véhicule à moteur (10) selon la revendication 5,
**caractérisée en ce que**
l'au moins une ouverture de microphone (18) fait saillie dans l'ouverture (36) entre le corps de base (26) et le corps d'antenne (28), dans lequel la capsule de microphone (16) est disposée au-dessus de l'ouverture (36) dans l'état inséré du microphone extérieur de véhicule à moteur (11), dans lequel le boîtier de microphone (14) est réalisé de préférence de manière étanche à l'eau.

7. Véhicule à moteur avec au moins un microphone extérieur de véhicule à moteur (11), avec au moins une unité de microphone (12) qui présente une capsule de microphone (16) disposée dans un boîtier de microphone (14), dans lequel le boîtier de microphone (14) présente au moins une ouverture de microphone (18), moyennant quoi un canal acoustique (24) est formé entre l'au moins une ouverture de microphone (18) et la capsule de microphone, dans lequel le microphone extérieur de véhicule à moteur (11) comprend un dispositif de commutation (30) qui est configuré pour libérer l'au moins une ouverture de microphone (18) dans un état activé du microphone extérieur de véhicule à moteur (11) et pour la fermer dans un état désactivé du microphone extérieur de véhicule à moteur (11), dans lequel le véhicule à moteur présente une surface extérieure de véhicule à moteur (20) avec au moins une cavité (33), dans lequel l'au moins un microphone extérieur de véhicule à moteur (11) est disposé dans l'état désactivé, dans lequel dans l'état activé du microphone extérieur de véhicule à moteur (11) l'au moins une ouverture de microphone (18) dépasse de la surface extérieure de véhicule à moteur (20),
**caractérisé en ce que**
le véhicule à moteur comprend un dispositif de commande (38), dans lequel le dispositif de commande (38) est conçu pour mettre l'au moins un microphone extérieur de véhicule à moteur (11) dans l'état activé lors de la constatation d'un verrouillage du véhicule à moteur.

8. Véhicule à moteur selon la revendication 7,
**caractérisé en ce que**
le dispositif de commande (38) est conçu, au moins après la constatation d'un démarrage du véhicule à moteur, mettre l'au moins un microphone extérieur de véhicule à moteur (11) dans l'état désactivé.

9. Véhicule à moteur selon la revendication 7 ou 8,
**caractérisé en ce que**
le dispositif de commande (38) est conçu, après le déroulement d'une période prédéterminée après le verrouillage du véhicule, mettre l'au moins un microphone extérieur de véhicule à moteur (11) dans l'état désactivé, dans lequel le dispositif de commande (38) est conçu, lors de la constatation d'une approche d'un utilisateur autorisé sous une valeur de seuil prédéfinissable, pour remettre l'au moins un microphone extérieur de véhicule à moteur (11) dans l'état activé.

10. Véhicule à moteur selon l'une des revendications 7 à 9,
**caractérisé en ce que**
le véhicule à moteur comprend au moins un dispositif capteur (40) qui est conçu pour constater si le véhicule a été arrêté et verrouillé dans une installation de lavage, dans lequel un dispositif capteur (40) est couplé au dispositif de commande (38) et le dispositif de commande (38) est conçu, lors de la constatation d'un arrêt et d'un verrouillage du véhicule à moteur dans une installation de lavage, pour désactiver et/ou laisser dans l'état activé l'au moins un microphone extérieur de véhicule à moteur (11).

11. Procédé destiné au fonctionnement d'une antenne de toit de véhicule à moteur (10) avec au moins un microphone extérieur de véhicule à moteur (11) avec au moins une unité de microphone (12) qui présente une capsule de microphone (16) disposée dans un boîtier de microphone (14), dans lequel le boîtier de microphone (14) présente au moins une ouverture de microphone (18), moyennant quoi un signal acoustique (24) est formé entre l'au moins une ouverture de microphone (18) et la capsule de microphone, dans lequel l'antenne de toit de véhicule à moteur (10) comprend un corps de base (26) destiné à un montage sur un toit de véhicule (20) et un corps d'antenne (28) couplé à celui-ci, dans lequel au moins un élément du corps de base (26) ou du corps d'antenne (28) est mobile, dans lequel le procédé comprend les étapes suivantes :
pour l'activation du microphone extérieur de véhicule à moteur (11) : libération de l'au moins une ouverture de microphone (18) par le biais d'un déplacement d'au moins un élément du corps de base (26) ou du corps d'antenne (28) ; et
pour la désactivation du microphone extérieur de véhicule à moteur (11) : fermeture de l'au moins une ouverture de microphone (18) par le biais d'un déplacement d'au moins un élément du corps de base (26) ou du corps d'antenne (28).
